# EUROPÄISCHE PATENTSCHRIFT

(11) **EP 3 507 111 B1**
(45) Veröffentlichungstag und Bekanntmachung des Hinweises auf die Patenterteilung: **03.06.2020**
(21) Anmeldenummer: 17732413.4
(22) Anmeldetag: 22.06.2017
(51) Int. Cl.: B60C 23/10

(54) **FAHRZEUGRAD**
VEHICLE WHEEL
ROUE DE VÉHICULE

(30) Priorität: 02.09.2016 DE 102016216622
(43) Veröffentlichungstag der Anmeldung: 10.07.2019
(73) Patentinhaber: Continental Reifen Deutschland GmbH, 30165 Hannover (DE)
(72) Erfinder: KURZ, Martin, 30161 Hannover (DE); MENZ, Rüdiger, 30167 Hannover (DE); GERHARDT, Joachim, 30890 Barsinghausen (DE); PAUL, Ingo, 30659 Hannover (DE); TREDER, Christian, 31535 Neustadt (DE); SCHULZE, Thomas, 30171 Hannover (DE); KOMISCHKE, Ralf, 31275 Lehrte (DE)
(74) Vertreter: Widjaja, Wira
(86) Internationale Anmeldenummer: PCT/EP2017/065331
(87) Internationale Veröffentlichungsnummer: WO 2018/041435

(56) Entgegenhaltungen:
- WO-A1-2015/075655
- WO-A2-2012/142120
- DE-A1- 10 001 348
- DE-A1-102014 104 289
- US-A1- 2011 203 710

## Beschreibung

### Die Erfindung betrifft ein Fahrzeugrad.

Fahrzeugräder weisen eine Felge und ein darauf aufgezogenen Fahrzeugreifen auf, zwischen denen ein Reifenvolumen eingeschlossen wird. In dem Reifenvolumen herrscht im Betrieb des Fahrzeugreifens ein vorab festgelegter Reifendruck. Über den Reifendruck wird ein Fahrverhalten des Fahrzeugreifens bestimmt, wobei der Reifendruck sich während der Fahrt aufgrund von beispielsweise thermischen Effekten verändern kann. Weiterhin kann der Reifendruck durch Diffusion über einen längeren Zeitraum abfallen. Durch derartige Veränderungen können sich im laufenden Betrieb des Fahrzeugrades Beeinträchtigungen des Fahrverhaltens, insbesondere eines Rollwiderstandes, ergeben. Ein zu geringer Reifendruck wird meist erst nach einem längeren Zeitraum beispielsweise bei einer routinemäßigen Kontrolle festgestellt.
In bestimmten Situationen ist ebenfalls wünschenswert den Reifendruck mit einer hohen Geschwindigkeit anzupassen.

Eine Anpassung des Reifendruckes durch eine elektrisch betriebene Miniaturpumpe im Felgentiefbett eines Fahrzeugrades ist beispielsweise in WO 2012/142120 A2 gezeigt. Weitere Möglichkeiten der Anpassung des Reifendruckes sind in DE 10 2014 104289 A1, WO 2015/075655 A1 und DE 100 01 348 A1 beschrieben.

Aufgabe der Erfindung ist, ein Fahrzeugrad bereitzustellen, dessen Fahrverhalten im Betrieb des Fahrzeugreifens in einfacher Weise präzise an eine aktuelle Fahrsituation angepasst werden kann.

Gelöst wird die Aufgabe gemäß dem Oberbegriff und den kennzeichnenden Merkmalen von Anspruch 1 dadurch, dass die Felge mit mindestens einer elektrisch betriebenen Miniaturpumpe zur Erzeugung eines Luftdruckes ausgestattet ist,
wobei der Reifendruck während der Fahrt mit der Pumpe an unterschiedliche Fahrtsituationen angepasst werden kann.

Ein Vorteil der Erfindung besteht darin, dass das Fahrzeugrad auf einfache Weise und präzise an eine aktuelle Fahrsituation angepasst werden kann. Beispielsweise könnte bei einer höheren Radlast der Reifendruck signifikant erhöht werden, um dadurch die Fahreigenschaften des Fahrzeugreifens zu verbessern und um den Rollwiderstand zu reduzieren. Die elektrisch betriebene Miniaturpumpe lässt sich einfach an einer Fahrzeugfelge integrieren. Aufgrund der geringen Abmessungen der Miniaturpumpe ist nur ein geringer Bauraum erforderlich. Außerdem lässt sich die elektrisch betriebene Miniaturpumpe auf einfache Weise mit einer elektrischen Schaltung ein- und ausschalten.
Dadurch ist vorteilhafterweise auch im Betrieb des Fahrzeugrades bzw. während der Fahrt ein stufenloses Anpassen eines Reifendruckes durch die Aktivierung der Miniaturpumpe möglich. Dadurch können beispielsweise durch Diffusion verursachte Verluste im Reifendruck ausgeglichen werden. Weiterhin kann je nach Fahrsituation der Reifendruck gezielt angepasst werden, so dass Reifeneigenschaften, insbesondere der Rollwiderstand, in Abhängigkeit der Fahrsituation als auch die Haltbarkeit des Fahrzeugrades optimiert werden können.

In einer vorteilhaften Weiterbildung der Erfindung ist vorgesehen, dass der Reifendruck mit der Pumpe in einer Zeit von weniger als 3 Minuten, vorzugsweise von weniger als 30 Sekunden, an die jeweilige Fahrsituation angepasst werden kann. Dadurch kann sehr schnell und dynamisch auf unterschiedliche Fahrsituationen reagiert werden.

In einer weiteren vorteilhaften Weiterbildung der Erfindung ist vorgesehen, dass die Miniaturpumpe in einem Hohlraum einer Felgenspeiche der Felge integriert ist. Dadurch ist die Miniaturpumpe von außen praktisch nicht sichtbar. Außerdem wird dadurch auch kein Bauraum an der Felge beansprucht, der die Abmessungen der Fahrzeugbremse beeinträchtigen könnte.

Gemäß der Erfindung ist weiterhin vorgesehen, dass die Miniaturpumpe im Felgentiefbett der Felge integriert ist. Dadurch würde die Miniaturpumpe direkt im Reifenhohlraum liegen, so dass keine zusätzlichen Verbindungsleitungen erforderlich sind, die durch den Felgenring geführt werden müssten. Die Position im Felgentiefbett hat ebenfalls den Vorteil, dass sich der Reifen einfacher auf die Felge montieren lässt.

In einer weiteren vorteilhaften Weiterbildung der Erfindung ist vorgesehen, dass die Miniaturpumpe im zentralen Basiskörper der Felge integriert ist. Dadurch ist die Miniaturpumpe von außen nicht sichtbar.

In einer weiteren vorteilhaften Weiterbildung der Erfindung ist vorgesehen, dass in der Felge elektrisch ansteuerbare Ventile integriert sind, wobei mit den Ventilen und der Miniaturpumpe der Reifendruck des Luftreifens reguliert wird. Dadurch lässt sich der Reifendruck im Reifen präzise und stufenlos an unterschiedliche Fahrsituationen anpassen.

In einer weiteren vorteilhaften Weiterbildung der Erfindung ist vorgesehen, dass die Miniaturpumpe eine Membranpumpe, eine Zahnradpumpe oder Kolbenpumpe ist. Mit diesen Pumpentypen lässt sich mit hoher Geschwindigkeit ein erforderlicher Reiendruck einstellen.

Gemäß der Erfindung ist weiterhin vorgesehen, dass an der Nabe ein Statorelement und an der Felge ein Rotorelement angeordnet sind,
wobei bei Rotationen des Rotorelementes um das Statorelement eine elektrische Energie erzeugt wird. Dadurch lässt sich auf einfache Weise Energie an der Fahrzeugfelge bereitstellen.

In einer weiteren vorteilhaften Weiterbildung der Erfindung ist vorgesehen, dass die elektrische Energie für den Antrieb der Miniaturpumpe und/oder erfindungsgemäß zum Aktivieren der Ventile und/oder für das Laden eines elektrischen Speichers genutzt wird. Dadurch lassen sich diese elektronischen Bauteile einfach mit elektrischer Energie versorgen.

In einer weiteren vorteilhaften Weiterbildung der Erfindung ist vorgesehen, dass der elektrische Speicher in Form eines Akkus in der Felge integriert ist. Dadurch ist der elektrische Speicher von der Außenseite des Fahrzeuges nicht sichtbar.

Gemäß der Erfindung ist weiterhin vorgesehen, dass an der Felge mindestens ein Belüftungsventil und zusätzlich mindestens ein Entlüftungsventil zum Anpassen des Reifendruckes angeordnet sind. Dadurch kann das Belüften und das Entlüften des Fahrzeugreifens präzise und mit einer hohen Geschwindigkeit erfolgen.

In einer weiteren vorteilhaften Weiterbildung der Erfindung ist vorgesehen, dass das Belüftungsventil und die Entlüftungsventile jeweils einzeln mit einer elektrischen Schaltung gesteuert werden. Dadurch kann der Reifendruck mit einer hohen Präzision an unterschiedliche Fahrsituationen angepasst werden.

Anhand von Ausführungsbeispielen soll die Erfindung im Folgenden näher erläutert werden. Es zeigen:
- Fig. 1: ein Fahrzeugrad mit einer Miniaturpumpe in der Felgenspeiche
- Fig. 2: ein Fahrzeugrad mit einer Miniaturpumpe im Basiskörper
- Fig. 3: ein Fahrzeugrad mit einer Miniaturpumpe im Felgentiefbett
- Fig. 4: ein Fahrzeugrad mit einem Rotorelement
- Fig. 5: ein Fahrzeugrad mit Entlüftungsventilen

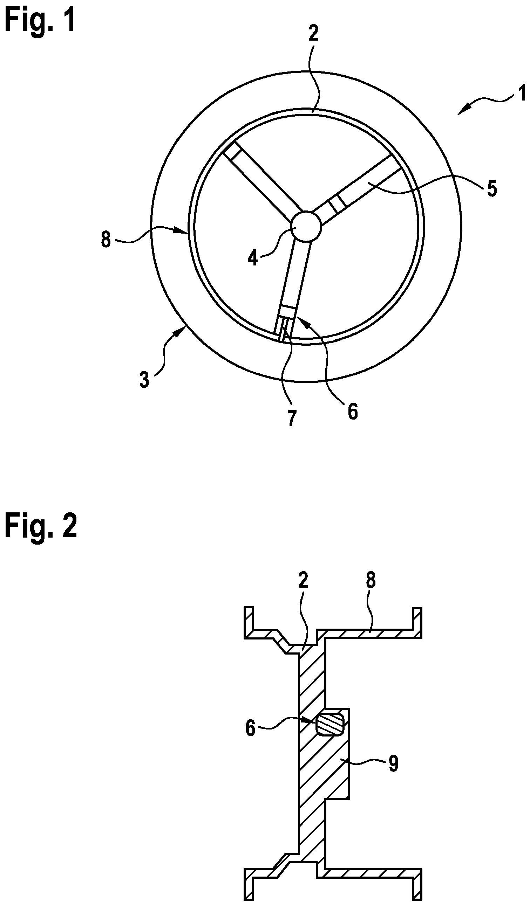

Fig. 1 zeigt ein Fahrzeugrad 1 mit einer Felge 2 und einem darauf aufgezogenen Reifen 3, einer Nabe 4 sowie drei zwischen der Nabe 4 und der Felge 2 angeordnete Speichen 5. Über die Nabe 4 wird das Fahrzeugrad 1 in allseits bekannter Weise gelagert, sodass sich das Fahrzeugrad 1 während des Betriebs drehen kann. Zwischen dem Reifen 3 und der Felge 2 wird ein gegenüber einem Außenbereich abgedichtetes Volumen ausgebildet, in dem ein bestimmter Reifendruck vorherrscht.

Gemäß diesem Ausführungsbeispiel sind die Speichen 5 in etwa hohlzylindrisch ausgeführt, wobei in einem Speichen-Innenraum eine Miniaturpumpe 6 angeordnet ist. Die Miniaturpumpe 6 ist in etwa im oberen Drittel der Speiche 5 angeordnet. Sie ist über einen Verbindungskanal 7 mit dem Reifenhohlraum des Reifens 3 verbunden. Der Verbindungskanal 7 ist durch den Felgenring 8 hindurchgeführt und mit einem nicht dargestellten Ventil mit dem Reifenhohlraum verbunden. Bei einer Betätigung der elektrisch betriebenen Miniaturpumpe 6 wird der Reifendruck im Reifen 3 an unterschiedliche Fahrsituationen angepasst. Über Sensoren könnte beispielsweise festgestellt worden sein, dass sich die Radlast signifikant erhöht hat, weil das Fahrzeug voll beladen wurde.
Nachfolgend würde dann der Reifendruck um eine entsprechende Druckdifferenz erhöht werden.

Die Fig. 2 zeigt ein weiteres Ausführungsbeispiel, bei dem die elektrisch betriebene Miniaturpumpe im Basiskörper 9 der Felge 2 integriert ist, wobei die Felge 2 in einer Radialschnittansicht dargestellt ist. Der Basiskörper 9 der Felge 2 stellt sozusagen das Verbindungsbauteil zur Nabe dar. Die Miniaturpumpe 6 ist über nicht dargestellte Verbindungsleitungen mit dem Felgenring 8 verbunden, um den Reifendruck anzupassen. Zur vereinfachten Darstellung ist der Reifen nicht dargestellt.

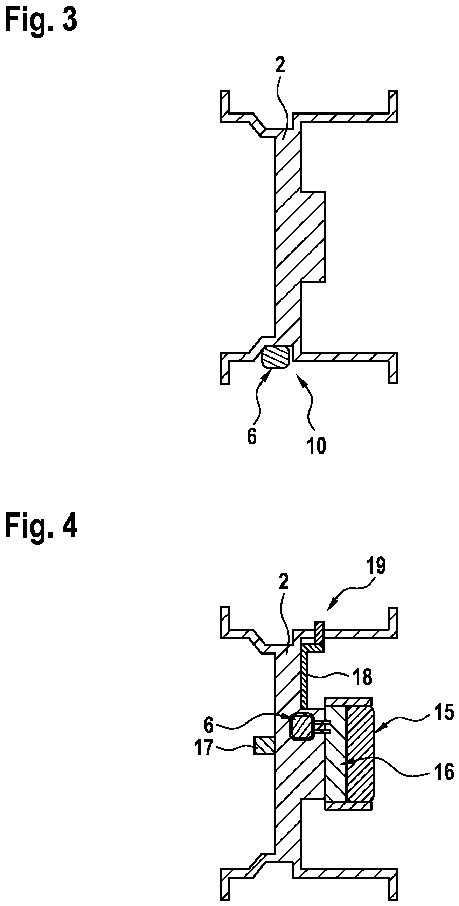

Die Fig. 3 zeigt ein weiteres Ausführungsbeispiel, bei dem die Miniaturpumpe 6 im Felgentiefbett 10 integriert ist. Die Miniaturpumpe befindet sich somit direkt im Reifenhohlraum.

Die Fig. 4 zeigt ein weiteres Ausführungsbeispiel, bei dem die Felge 2 in einer Schnittansicht dargestellt ist. Die Miniaturpumpe 6 ist im Basiskörper der Felge integriert. Die Felge weist am Basiskörper ein Rotorelement 16 auf, welches sich bei Bewegung des Fahrzeugrades um das Statorelement 15 dreht, welches an der feststehenden Nabe angeordnet ist. Bei Rotation des Fahrzeugrades kann auf diese Weise elektrische Energie bereitgestellt werden, um über die dargestellten elektrischen Verbindungen die Miniaturpumpe 6 mit elektrischer Energie zu versorgen. Die Miniaturpumpe 6 ist über eine Verbindungsleitung 18 mit dem Felgenring der Felge 2 verbunden. Im Felgenring ist schematisch ein Ventil 19 zum Befüllen des Reifenhohlraums dargestellt. An der Felge 2 ist ebenfalls schematisch ein elektrischer Speicher 17 dargestellt, der mit dem System aus Rotorelement und Statorelement aufgeladen werden kann. Der elektrische Speicher kann dazu dienen, Ventile im Felgenring zu aktivieren oder die Pumpe 6 anzutreiben.

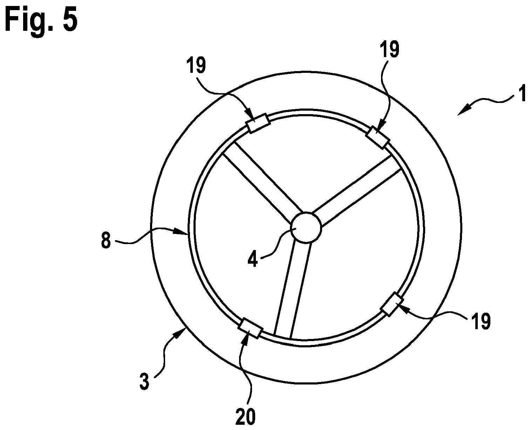

Die Fig. 5 zeigt ein weiteres Ausführungsbeispiel. Das Fahrzeugrad 1 ist in einer Seitenansicht dargestellt. Am Felgenring 8 sind ein Belüftungsventil 20 und mehrere einzelne Entlüftungsventile 19 angeordnet. Durch die Vielzahl der Ventile lässt sich der Reifendruck mit einer hohen Geschwindigkeit regulieren. Insbesondere lässt sich mit den drei dargestellten Entlüftungsventilen 19 der Reifendruck auf einfache und schnelle Weise absenken. Alle Ventile werden beispielsweise über Elektromagnete gesteuert. Die Miniaturpumpe und der elektrische Speicher sind in der Felge integriert.

### Bezugszeichenliste

- 1: Fahrzeugrad
- 2: Felge
- 3: Reifen
- 4: Nabe
- 5: Speichen bzw. Felgenspeiche
- 6: Miniaturpumpe
- 7: Verbindungskanal zum Reifen
- 8: Felgenring
- 9: Basiskörper der Felge
- 10: Felgentiefbett
- 15: Statorelement an der Nabe
- 16: Rotorelement an der Felge
- 17: Elektrischer Speicher
- 18: Verbindungsleitung zum Felgenring
- 19: Entlüftungsventile
- 20: Belüftungsventil

## Patentansprüche

1. Fahrzeugrad (1) mit einer Felge (2) mit einem Felgenring (8), einer Nabe und einem auf die Felge (2) aufgezogenen Luftreifen (3),
wobei der Luftreifen eine Karkasse, einen Laufstreifen, zwei Seitenwände und Reifenwülste umfasst,
wobei die Felge (2) und der Luftreifen (3) einen Reifenhohlraum bilden und wobei der Luftreifen (3) mit unterschiedlichen Reifendrücken befüllbar ist, wobei die Felge (2) mit mindestens einer elektrisch betriebenen Miniaturpumpe (6) zur Erzeugung eines Luftdruckes ausgestattet ist,
wobei der Reifendruck während der Fahrt mit der Miniaturpumpe (6) an unterschiedliche Fahrtsituationen angepasst werden kann,
wobei die Miniaturpumpe (6) im Felgentiefbett (10) der Felge (2) integriert ist, **dadurch gekennzeichnet, dass**
an der Felge (2) mindestens ein Belüftungsventil (20) und zusätzlich mindestens ein Entlüftungsventil (19) zum Anpassen des Reifendruckes angeordnet sind, wobei an der Nabe (4) ein Statorelement (15) und an der Felge (2) ein Rotorelement (16) angeordnet sind, wobei bei Rotationen des Rotorelementes (16) um das Statorelement (15) eine elektrische Energie erzeugt wird, wobei die elektrische Energie zum Aktivieren der Ventile (19, 20) genutzt wird.

2. Fahrzeugrad nach Anspruch 1, **dadurch gekennzeichnet, dass**
die Miniaturpumpe (6) in einem Hohlraum einer Felgenspeiche (5) der Felge (2) integriert ist.

3. Fahrzeugrad nach einem der vorhergehenden Ansprüche,
**dadurch gekennzeichnet, dass**
die Miniaturpumpe (6) im zentralen Basiskörper (9) der Felge (2) integriert ist.

4. Fahrzeugrad nach einem der vorhergehenden Ansprüche,
**dadurch gekennzeichnet, dass**
die Miniaturpumpe (6) eine Membranpumpe, eine Zahnradpumpe oder Kolbenpumpe ist.

5. Fahrzeugrad nach einem der vorhergehenden Ansprüche,
**dadurch gekennzeichnet, dass**
die elektrische Energie für den Antrieb der Miniaturpumpe (6) und/oder für das Laden eines elektrischen Speichers (17) genutzt wird.

6. Fahrzeugrad nach Anspruch 5,
**dadurch gekennzeichnet, dass**
der elektrische Speicher (17) in Form eines Akkus in der Felge (2) integriert ist.

7. Fahrzeugrad nach einem der vorhergehenden Ansprüche,
**dadurch gekennzeichnet, dass**
das Belüftungsventil (17) und die Entlüftungsventile (18) jeweils einzeln mit einer elektrischen Schaltung gesteuert werden.

8. Fahrzeugrad nach einem der vorhergehenden Ansprüche,
**dadurch gekennzeichnet, dass**
die Miniaturpumpe Abmessungen mit einer maximalen Höhe von ca. 10 cm, einer maximalen Breite von ca. 10 cm und einer maximalen Tiefe von 5 cm aufweist.

## Claims

1. Vehicle wheel (1) comprising a rim (2) with a rim ring (8), a hub and a pneumatic tyre (3) drawn onto the rim (2),
wherein the pneumatic tyre comprises a carcass, a tread, two sidewalls and tyre beads,
wherein the rim (2) and the pneumatic tyre (3) form a tyre cavity and
wherein the pneumatic tyre (3) can be inflated at different tyre pressures,
wherein the rim (2) is equipped with at least one electrically operated miniature pump (6) for producing an air pressure,
wherein, with the miniature pump (6), the tyre pressure can be adapted during driving to different driving situations,
wherein the miniature pump (6) is integrated in the drop centre (10) of the rim (2),
**characterized in that**
at least one air-admitting valve (20) and in addition at least one air-bleeding valve (19) are arranged on the rim (2) for adapting the tyre pressure,
wherein a stator element (15) is arranged on the hub (4) and a rotor element (16) is arranged on the rim (2), wherein an electrical energy is generated when rotations of the rotor element (16) take place around the stator element (15), the electrical energy being used for activating the valves (19, 20).

2. Vehicle wheel according to Claim 1,
**characterized in that**
the miniature pump (6) is integrated in a cavity of a spoke (5) of the rim (2).

3. Vehicle wheel according to one of the preceding claims,
**characterized in that**
the miniature pump (6) is integrated in the central base body (9) of the rim (2).

4. Vehicle wheel according to one of the preceding claims,
**characterized in that**
the miniature pump (6) is a diaphragm pump, a gear pump or a piston pump.

5. Vehicle wheel according to one of the preceding claims,
**characterized in that** the electrical energy is used for powering the miniature pump (6) and/or for charging an electrical store (17).

6. Vehicle wheel according to Claim 5,
**characterized in that** the electrical store (17) is integrated in the rim (2) in the form of a rechargeable battery.

7. Vehicle wheel according to one of the preceding claims,
**characterized in that**
the air-admitting valve (17) and the air-bleeding valves (18) are respectively controlled individually by an electrical circuit.

8. Vehicle wheel according to one of the preceding claims,
**characterized in that**
the miniature pump has dimensions with a maximum height of about 10 cm, a maximum width of about 10 cm and a maximum depth of 5 cm.

## Revendications

1. Roue de véhicule (1) comprenant une jante (2) avec un cercle de jante (8), un moyeu et un pneumatique (3) tiré par-dessus la jante (2),
le pneumatique comprenant une carcasse, une bande de roulement, deux parois latérales et des talons de pneu,
la jante (2) et le pneumatique (3) formant une cavité de pneu et le pneumatique (3) pouvant être rempli avec différentes pressions de pneu,
la jante (2) étant munie d'au moins une pompe miniature à commande électrique (6) pour produire une pression d'air,
la pression du pneu pendant la conduite pouvant être adaptée avec la pompe miniature (6) à différentes situations de conduite,
la pompe miniature (6) étant intégrée dans la base creuse de jante (10) de la jante (2),
**caractérisée en ce**
**qu'**au moins une soupape de ventilation (20) et en outre au moins une soupape de désaérage (19) pour l'adaptation de la pression du pneu sont disposées au niveau de la jante (2), un élément de stator (15) étant disposé au niveau du moyeu (4) et un élément de rotor (16) étant disposé au niveau de la jante (2), une énergie électrique étant générée lors de rotations de l'élément de rotor (16) autour de l'élément de stator (15), l'énergie électrique étant utilisée pour activer les soupapes (19, 20).

2. Roue de véhicule selon la revendication 1, **caractérisée en ce que**
la pompe miniature (6) est intégrée dans une cavité d'un rayon de jante (5) de la jante (2).

3. Roue de véhicule selon l'une quelconque des revendications précédentes,
**caractérisée en ce que**
la pompe miniature (6) est intégrée dans le corps de base central (9) de la jante (2).

4. Roue de véhicule selon l'une quelconque des revendications précédentes,
**caractérisée en ce que**
la pompe miniature (6) est une pompe à membrane, une pompe à engrenages ou une pompe à piston.

5. Roue de véhicule selon l'une quelconque des revendications précédentes,
**caractérisée en ce que**
l'énergie électrique est utilisée pour l'entraînement de la pompe miniature (6) et/ou pour charger un accumulateur électrique (17).

6. Roue de véhicule selon la revendication 5, **caractérisée en ce que**
l'accumulateur électrique (17) est intégré dans la jante (2) sous la forme d'une batterie.

7. Roue de véhicule selon l'une quelconque des revendications précédentes,
**caractérisée en ce que**
la soupape de ventilation (17) et les soupapes de désaérage (18) sont chacune commandées individuellement au moyen d'un circuit électrique.

8. Roue de véhicule selon l'une quelconque des revendications précédentes,
**caractérisée en ce que**
la pompe miniature présente des dimensions avec une hauteur maximale d'environ 10 cm, une largeur maximale d'environ 10 cm et une profondeur maximale de 5 cm.
